Europäisches Patentamt

European Patent Office

Office européen des brevets

(11) Publication number: **0 272 765 B1**

# EUROPEAN PATENT SPECIFICATION

(45) Date of publication of patent specification: **27.11.91**   (51) Int. Cl.⁵: **B01D 45/08**, B01D 45/16

(21) Application number: **87303161.1**

(22) Date of filing: **10.04.87**

(54) Vane-type separator.

(30) Priority: **23.12.86 GB 8630750**
**28.01.87 GB 8701844**

(43) Date of publication of application:
**29.06.88 Bulletin 88/26**

(45) Publication of the grant of the patent:
**27.11.91 Bulletin 91/48**

(84) Designated Contracting States:
**AT BE CH DE ES FR IT LI NL SE**

(56) References cited:
**DE-A- 2 439 614**
**DE-A- 2 553 198**
**GB-A- 2 000 451**
**US-A- 3 938 972**

(73) Proprietor: **Burgess-Manning Limited
Rankin House West Street
Ware Herts SG12 9EE(GB)**

(72) Inventor: **Aretz, Hans Jurgen
Bergonienstrasse 2D
W-4000 Dusseldorf(DE)**
Inventor: **Diekmann, Rainer
Habichtweg 6
W-4030 Ratingen 6(DE)**
Inventor: **Koene, Frits
Prins Bernhardlaan 44
NL-6866 BZ Heeslum(NL)**

(74) Representative: **Nash, Keith Wilfrid et al
KEITH W. NASH & Co. Pearl Assurance
House 90-92 Regent Street
Cambridge CB2 1DP(GB)**

## Description

This invention relates to a vane-type separator for separating liquid from liquid-carrying gases, ie, gases in which liquid particles, especially water particles, are entrained.

A known vane-type separator passes the gases in a generally horizontal direction. A series of generally parallel, solid vanes extend generally horizontally and define between them paths for the flow of gas along which the gas is forced to change direction several times, with some degree of centrifugal action occurring as the change in direction occurs. The heavier liquid droplets are then thrown against the walls of the solid vanes, coalescing to flow as a sheet across the vanes, ie, in a direction perpendicular to the flow of gas. The liquid is collected by side troughs provided on the vanes.

Furthermore, in US-A-3938972 there is disclosed a vane-type separator for separating liquid from liquid-laden gas, of a kind comprising a plurality of hollow vanes mounted generally upright and spaced apart to define paths between for passage of gas from a bottom entry level to a top exit level, the walls of the hollow vanes being shaped so that in following said paths liquid laden gas is made to undergo such variations in direction and velocity that the entrained liquid is separated from the gas and is caused to be incident on the exterior surface of the vane walls, said vane walls having apertures through which the surface water thereon tends to be impelled into the interiors of the hollow vanes by the upward gas flow, whereby the liquid collects at the bottom of the interiors of the vanes whilst gases with liquid removed therefrom exit at the top between the vanes.

Whilst such known vane-type separators operate satisfactorily, it is an object of this invention to provide an alternative vane-type separator having a higher degree of efficiency in separating the entrained liquid from the gases.

According to the present inventin a vane-type separator of a kind as hereinabove defined is characterised in that adjacent to the apertures the vane walls are provided with deflectors which extend into the hollow vanes in such a manner that each hollow vane has a continuous substantially unobstructed interior passage extending between the entry and exit levels for a free downward flow of separated liquid to the bottom of the interior of the vane to allow drainage therefrom.

The improved separator in accordance with the invention is believed to becapable of removing approximately 98% of entrained liquid particles fro the gas flow.

The change in path direction at each angle of the zig-zag is typically of the order of 100°.

Each zig-zag path preferably has at least four positions between the top and bottom thereof at which a liquid-separating change in direction is produced.

In a preferred arrangement, the vanes have apertures on parts of the walls thereof which face downwardly; whereby liquid running on the exterior of the walls is impelled upwardly through said apertures by the upwardly directed gas flow.

In one convenient arrangement, the vane wals have horizontal lines of horizontally elongated apertures.

The separator may comprise a cylindrical chamber having a substantial plurality of vanes mounted therein to extend across the chamber in parallel, with lengths varying so that the vanes fully span the chamber except at two opposite side regions thereof, where the chamber is closed to upward passage of gases. In this way, all the gases flowing upwardly from the bottom of the chamber are caused to enter the tortuous paths between the hollow vanes.

The vanes may communicate at the bottom with a liquid drainage channel. In a preferred arrangement, this drainage channel is formed around the periphery of the chamber, the bottom of the interiors of the vanes communicating with the channel at the lateral ends of said vanes.

## Brief description of the drawings

The invention is now exemplified with reference to the accompanying drawings, in which:

Figure 1 is a perspective view of a vane-type liquid/gas separating chamber in accordance with the invention;

Figure 2 is a perspective view of the chamber from above;

Figure 3 is an enlarged view showing three parallel hollow vanes in transverse cross-section at right-angles to their lengths; and

Figure 4 is a perspective view of a single hollow vane.

## Description of embodiment

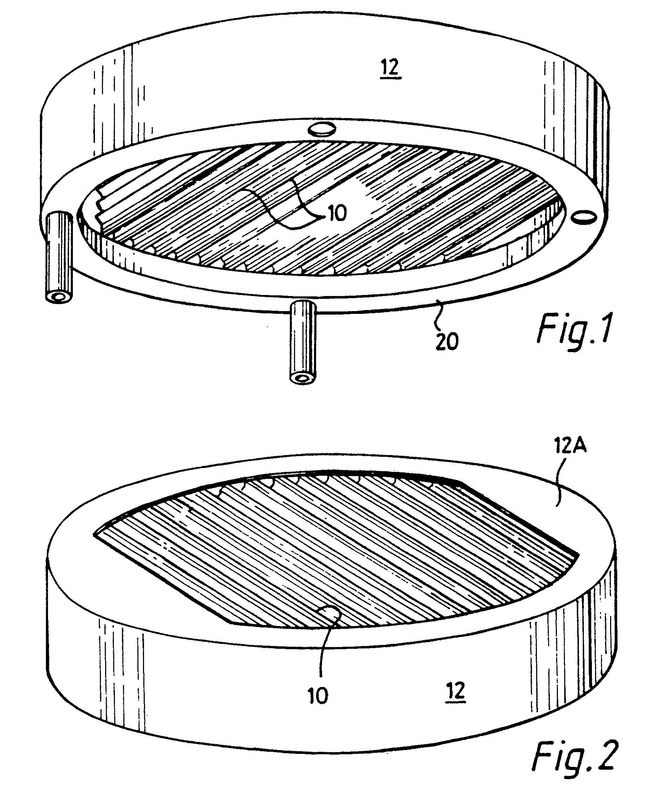

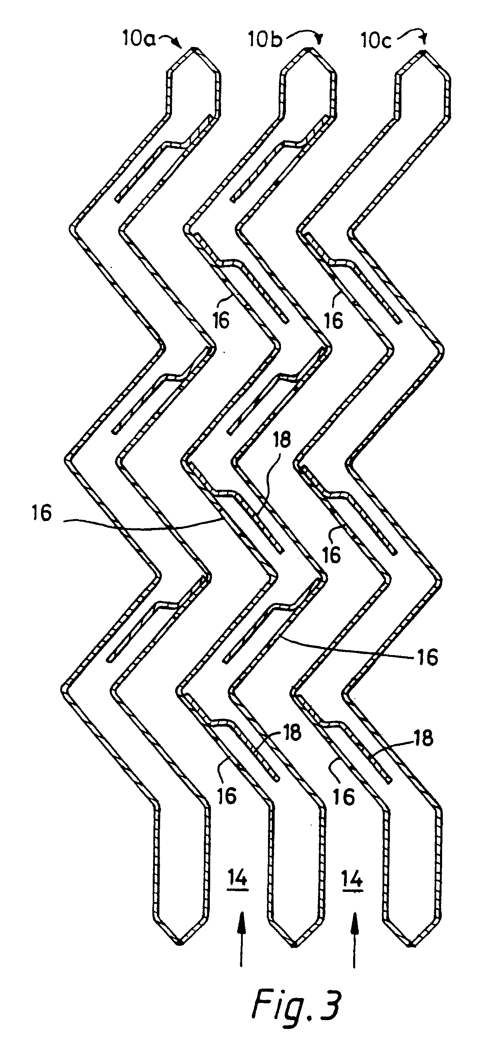

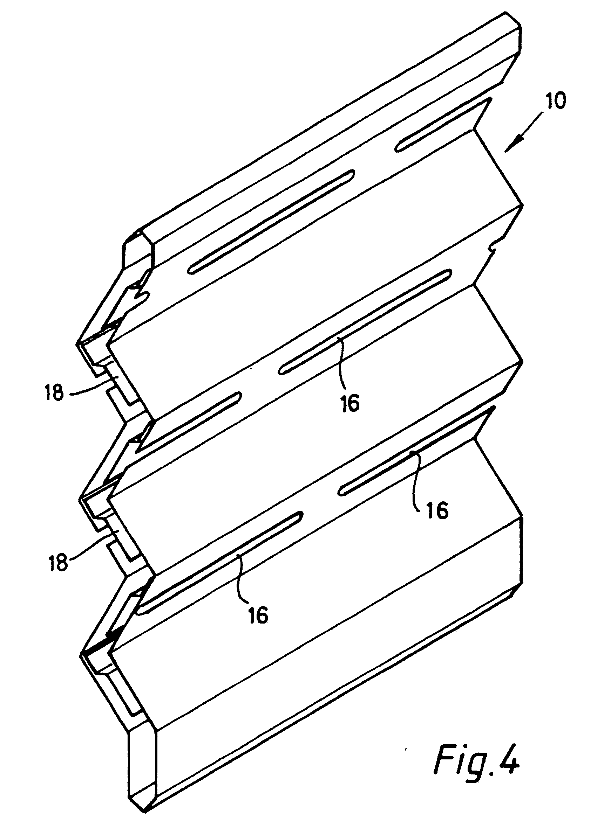

Referring first to Figures 1 and 2, a series of parallel upright vanes 10 extend from side to side across the interior of a cylindrical chamber 12. In practice, the chamber is mounted at the top of a gas liquid treatment apparatus (not shown). Within said apparatus, the gases in which water or other liquid is entrained pass upwardly at high velocity into the bottom of the chamber. The gases emerge from the top of the chamber with substantially all entrained liquid removed therefrom. This is achieved by an arrangement of hollow vanes 10 substantially as shown in Figures 3 and 4 of the drawings.

Referring first to Figure 3, the left-hand vane 10a is the last vane, ie, is shortest, on one side of the chamber. The vane referenced 10c is the last vane, ie, the shortest, on the opposite side of the chamber. The vane referenced 10b is one of a substantial plurality of vanes which span the chamber between the aforementioned vanes 10a and 10c. The various vanes 10b are of differing lengths so as fully to span the chamber. Thus, the whole area of the chamber is filled by the vanes except for two small regions at opposite sides thereof. As indicated at 12a in Figure 2, the top of the chamber is closed off at these opposite side regions to prevent the flow of gas. Thus, all gas entering the base of the chamber passes upwards between the vanes.

Each vane 10 is hollow and the parallel walls thereof define zig-zag paths 14 for upward passage of the gas between said vanes. Each zig-zag path is similar, and has five positions between the bottom and the top at which the path changes in direction by an angle of nearly 90°. In use, at each of these positions, the upwardly flowing gas is caused to change direction and velocity, with the result that the liquid particles entrained therein are caused to be incident on the exterior surfaces of the walls of the vanes, there to coalesce and flow on said exterior surfaces.

In order to define the said zig-zag paths 14, the walls of the hollow vanes 10 have inclined parts which alternately face downwardly and upwardly. The downwardly facing parts are provided with apertures 16. When the liquid flowing on the exterior surfaces of the walls reaches these apertures, the liquid is impelled into the interior of the vane 10 by the upwardly directed gas flow in the passages 14. Deflectors 18 within the hollow vanes act to arrest the inwardly impelled liquid and assist in ensuring flow of said liquid to the bottom of the interior of the vanes, where it is collected in a drainage channel 20 (see Figure 1) provided around the periphery of the cylindrical chamber 12.

Figure 4 shows one of the vanes 10 in perspective. From this Figure it can be seen that the apertures 16 take the form of a horizontal line of horizontally elongated slots extending across the vane from one lateral end thereof to the other. It will be noted that, in the vertical direction, the slots 16 in successive rows are in slightly staggered relationship to one another.

Referring again to Figure 3, it will also be noted that the hollow vanes 10a and 10c, which are the last vanes in the assembly on opposite sides thereof, do not include apertures 16 and associated internal deflectors 18 on the walls thereof which face outwardly. As abovementioned, gas flow is prevented from taking place between the wall of the chamber and these outside walls of the edge vanes 10a and 10c.

## Claims

1. A vane-type separator for separating liquid from liquid-laden gases, comprising a plurality of hollow vanes (10) mounted generally upright and spaced apart to define paths (14) between for passage of gas from a bottom entry level to a top exit level, the walls of the hollow vanes being shaped so that in following said paths liquid laden gas is made to undergo such variations in direction and velocity that tile entrained liquid is separated from the gas and is caused to be incident on the exterior surface of the vane walls, said vane walls having apertures (16) through which the surface water thereon tends to be impelled into the interiors of the hollow vanes by the upward gas flow, whereby the liquid collects at the bottom of the interiors of the vanes whilst gases with liquid removed therefrom exit at the top between the vanes, characterised in that adjacent to the apertures (16) the vane walls are provided with deflectors (18) which extend into the hollow vanes (10) in such a manner that each hollow vane has a continuous substantially unobstructed interior passage extending between the entry and exit levels for a free downward flow of separated liquid to the bottom of the interior of the vane to allow drainage therefrom.

2. A separator according to claim 1, characterised in that the vanes (10) define similar and parallel zig-zag paths between them.

3. A separator according to claim 2, characterised in that the change in path direction at each angle of a zig-zag is of the order of 100°.

4. A separator according to claim 2 or claim 3, characterised in that each zig-zag path (14) has at least four positions between the top and the bottom thereof at which a liquid-separating change in direction is produced.

5. A separator according to any one of claims 1 to 4, characterised in that the vanes (10) have apertures on parts of the walls thereof which face downwardly whereby liquid running on the exterior of the walls is impelled upwardly through said apertures by the upwardly directed gas flow.

6. A separator according to any one of claims 1 to 5, characterised in that the vane walls have horizontal lines of horizontally elongated apertures.

7. A separator according to any one of the preceding claims characterised by a cylindrical chamber (12) having a substantial plurality of vanes mounted therein to extend across the chamber in parallel, with lengths varying so that the vanes fully span the chamber except at two opposite side regions (12A) thereof, where the chamber is closed to upward passage of gases.

8. A separator according to claim 7, characterised in that the vanes communicate at the bottom with a liquid drainage channel (20).

9. A separator according to claim 8, characterised in that the drainage channel (20) is formed around the periphery of the chamber (12) and the bottom of the interiors of the vanes (10) communicate with the channel at the lateral ends of the vanes.

10. A separator according to any one of the claims 6 to 9 characterised in that each horizontally elongated aperture (16) is staggered in a vertical direction relative to the adjacent aperture in the respective vane wall.

**Revendications**

1. Un séparateur du type à ailettes, destiné à séparer un liquide à partir de gaz chargés de liquide, comprenant un ensemble d'ailettes creuses (10) montées selon une orientation générale verticale et mutuellement espacées pour définir entre elles des chemins (14) pour le passage de gaz, depuis un niveau d'entrée inférieur jusqu'à un niveau de sortie supérieur, les parois des ailettes creuses ayant une forme telle qu'en suivant ces chemins, le gaz chargé de liquide subisse des variations de direction et de vitesse qui soient telles que le liquide entraîné soit séparé du gaz et soit projeté sur la surface extérieure des parois d'ailettes, ces parois d'ailettes comportant des ouvertures (16) à travers lesquelles l'eau de surface qui circule sur les parois d'ailettes a tendance à être entraînée dans les parties intérieures des ailettes creuses, par l'écoulement de gaz ascendant, grâce à quoi le liquide se rassemble au bas de ces parties intérieures des ailettes, tandis que les gaz à partir desquels le liquide est extrait sortent à la partie supérieure, entre les ailettes, caractérisé en ce qu'en position adjacente aux ouvertures (16), les parois d'ailettes comportent des déflecteurs (18) qui s'étendent à l'intérieur des ailettes creuses (10), d'une manière telle que chaque ailette creuse présente un passage intérieur continu et pratiquement sans obstruction, qui s'étend entre les niveaux d'entrée et de sortie, pour permettre un libre écoulement descendant du liquide séparé, vers la partie inférieure de l'intérieur de l'ailette, afin de permettre son évacuation à partir de cette région.

2. Un séparateur selon la revendication 1, caractérisé en ce que les ailettes (10) définissent entre elles des chemins en zigzag, similaires et parallèles.

3. Un séparateur selon la revendication 2, caractérisé en ce que le changement de direction d'un chemin, à chaque angle d'un zigzag, est de l'ordre de 100°.

4. Un séparateur selon la revendication 2 ou 3, caractérisé en ce que chaque chemin en Zigzag (14) comporte au moins quatre positions entre sa partie supérieure et sa partie inférieure, dans lesquelles se produit un changement de direction pour la séparation du liquide.

5. Un séparateur selon l'une quelconque des revendications 1 à 4, caractérisé en ce que les ailettes (10) comportent des ouvertures sur des parties de leurs parois qui se font face vers le bas, grâce à quoi le liquide qui s'écoule sur l'extérieur des parois est entrainé vers le haut à travers les ouvertures, par l'écoulement de gaz également dirigé vers le haut.

6. Un séparateur selon l'une quelconque des revendications 1 à 5, caractérisé en ce que les parois d'ailettes présentent des lignes horizontales d'ouvertures allongées horizontalement.

7. Un séparateur selon l'une quelconque des revendications précédentes, caractérisé par une chambre cylindrique (12) comprenant un nombre notable d'ailettes montées à l'intérieur, de façon à s'étendre parallèlement les unes aux autres à l'intérieur de cette chambre, avec des longueurs qui varient de telle sorte que les ailettes couvrent entièrement l'étendue de cette chambre, sauf dans deux régions latérales opposées (12A) de celle-ci, où la chambre est fermée vis-à-vis du passage ascendant des gaz.

8. Un séparateur selon la revendication 7, caractérisé en ce que les ailettes communiquent à leur partie inférieure avec un canal d'évacuation de liquide (20).

9. Un séparateur selon la revendication 8, caractérisé en ce que le canal d'évacuation (20) est formé à la périphérie de la chambre (12), et les parties inférieures des parties intérieures des ailettes (10) communiquent avec le canal aux extrémités latérales des ailettes.

10. Un séparateur selon l'une quelconque des revendications 6 à 9, caractérisé en ce que chaque ouverture allongée horizontalement (16) est décalée dans une direction verticale par rapport à l'ouverture adjacente dans la paroi d'ailette respective.

**Patentansprüche**

1. Ein Separator der Schaufelbauart zum Abtrennen von Flüssigkeiten von mit Flüssigkeit beladenen Gasen mit mehreren im allgemeinen aufrecht und unter gegenseitigem Abstand montierten hohlen Schaufeln (10) unter Bilden von Pfaden (14) zwischen sich zum Durchtritt von Gas von einem am Boden gelegenen Eingang zu einem oben gelegenen Ausgang, wobei die Wände der hohlen Schaufeln so geformt sind, daß das mit Flüssigkeit beladene Gas beim Verfolg dieser Pfade solchen Änderungen in Richtung und Geschwindigkeit ausgesetzt wird, daß die mitgenommene Flüssigkeit vom Gas getrennt und zum Auftreffen auf die Außenseite der Schaufelwände gebracht wird, die Öffnungen (16) aufweisen, durch die das auf ihnen befindliche Obenflächenwasser durch die Aufwärtsströmung des Gases in die Innenräume der hohlen Schaufeln gedrückt wird, wodurch sich Flüssigkeit am Boden der Innenräume der Schaufeln ansammelt, während die Gase mit der von ihnen entfernten Flüssigkeit an der Oberseite zwischen den Schaufeln austreten, dadurch gekennzeichnet, daß die Schaufelwände angrenzend an die Öffnungen (16) mit Ablenkflächen (18) versehen sind, die in solcher Weise in die hohlen Schaufeln (10) hinein verlaufen, daß jede hohle Schaufel einen zwischen dem Eintritts- und dem Austrittsende verlaufenden kontinuierlichen, im wesentlichen hindernisfreien Innendurchgang zur freien Abwärtsströmung der abgetrennten Flüssigkeit zum Boden des Innenraumes der Schaufel zum Ermöglichen eines Ablaufens aus diesem aufweist.

2. Ein Separator nach Anspruch 1, dadurch gekennzeichnet, daß die Schaufeln (10) ähnliche und parallele Zickzack-Pfade zwischen sich begrenzen.

3. Ein Separator nach Anspruch 2, dadurch gekennzeichnet, daß die Änderung in der Pfadrichtung an jedem Winkel der Zickzackbahn in der Größenordnung von 100° liegt.

4. Ein Separator nach Anspruch 2 oder 3, dadurch gekennzeichnet, daß jeder Zickzack-Pfad (14) zwischen seiner Oberseite und seinem Boden mindestens vier Stellen aufweist, an denen eine die Flüssigkeit abtrennende Änderung in der Richtung erzeugt wird.

5. Ein Separator nach irgendeinem der Ansprüche 1 bis 4, dadurch gekennzeichnet, daß die Schaufeln (10) auf Teilen der Wände nach unten gerichtete Öffnungen aufweisen, so daß auf der Außenseite der Wände strömende Flüssigkeit durch die nach oben gerichtete Gasströmung durch die Öffnungen nach oben gedrückt wird.

6. Ein Separator nach irgendeinem der Ansprüche 1 bis 5, dadurch gekennzeichnet, daß die Schaufelwände horizontale Linien aus horizontal langgestreckten Öffnungen aufweisen.

7. Ein Separator nach irgendeinem der vorhergehenden Ansprüche, gekennzeichnet durch eine zylinderförmige Kammer (12) mit einer wesentlichen Vielzahl von in dieser montierten Schaufeln zum Verlauf entlang der Kammer in parallelen Reihen mit veränderlicher Länge, so daß die Schaufeln die Kammer mit Ausnahme an zwei gegenüberliegenden Seitenbereichen (12A), an denen die Kammer für den Durchtritt der Gase nach oben geschlossen ist, vollständig überdecken.

8. Ein Separator nach Anspruch 7, dadurch gekennzeichnet, daß die Schaufeln am Boden mit einem Abzugskanal (20) für Flüssigkeit in Verbindung stehen.

9. Ein Separator nach Anspruch 8, dadurch gekennzeichnet, daß der Abzugskanal (20) um den Umfang der Kammer (12) ausgebildet ist und der Boden der Innenräume der Schaufeln (10) an den seitlichen Enden der Schaufeln mit dem Kanal in Verbindung steht.

10. Ein Separator nach irgendeinem der Ansprüche 6 bis 9, dadurch gekennzeichnet, daß jede horizontal langgestreckte Öffnung (16) in einer Vertikalrichtung gegenüber der benachbarten Öffnung in der entsprechenden Schaufelwand versetzt ist.

Fig.1

Fig.2

Fig.3

Fig.4